# EUROPÄISCHE PATENTSCHRIFT

(11) **EP 4 126 434 B1**
(45) Veröffentlichungstag und Bekanntmachung des Hinweises auf die Patenterteilung: **30.08.2023**
(21) Anmeldenummer: 22701381.0
(22) Anmeldetag: 24.01.2022
(51) Int. Cl.: B23K 9/02, B23K 9/095, B23K 9/235, B23K 9/32, B23K 31/02, B23K 37/00

(54) **VERFAHREN ZUR FESTLEGUNG VON SCHWEISSPARAMETERN FÜR EINEN SCHWEISSPROZESS AN EINEM WERKSTÜCK UND SCHWEISSVORRICHTUNG ZUR DURCHFÜHRUNG EINES SCHWEISSPROZESSES AN EINEM WERKSTÜCK MIT FESTGELEGTEN SCHWEISSPARAMETERN**
METHOD OF DETERMINING WELDING PARAMETERS FOR A WELDING PROCESS ON A WORKPIECE AND WELDING DEVICE FOR CARRYING OUT A WELDING PROCESS ON A WORKPIECE WITH FIXED WELDING PARAMETERS
PROCÉDÉ DE DÉTERMINATION DES PARAMÈTRES DE SOUDAGE POUR UN PROCÉDÉ DE SOUDAGE SUR UNE PIÈCE ET DISPOSITIF DE SOUDAGE PERMETTANT DE METTRE EN UVRE UN PROCÉDÉ DE SOUDAGE SUR UNE PIÈCE À L'AIDE DES PARAMÈTRES DE SOUDAGE DÉFINIS

(30) Priorität: 25.01.2021 EP 21153236
(43) Veröffentlichungstag der Anmeldung: 08.02.2023
(73) Patentinhaber: FRONIUS INTERNATIONAL GmbH, 4643 Pettenbach (AT)
(72) Erfinder: ENNSBRUNNER, Helmut, 4643 Pettenbach (AT)
(74) Vertreter: SONN Patentanwälte OG
(86) Internationale Anmeldenummer: PCT/EP2022/051480
(87) Internationale Veröffentlichungsnummer: WO 2022/157354

(56) Entgegenhaltungen:
- EP-A1- 2 809 472
- EP-B1- 2 809 472
- PL-B1- 218 257
- US-A- 4 375 026
- US-A- 4 817 020

## Beschreibung

Die Erfindung betrifft ein Verfahren zur Festlegung von Schweißparametern für einen Schweißprozess an einem Werkstück, bei dem ein an einem Roboter befestigter Schweißbrenner entlang einer vorgegebenen Schweißbahn über das Werkstück geführt und in Abhängigkeit der Position entlang der Schweißbahn vorgegebene Schweißparameter zur Bearbeitung des Werkstücks eingestellt werden.

Weiters betrifft die vorliegende Erfindung eine Schweißvorrichtung zur Durchführung eines Schweißprozesses an einem Werkstück mit festgelegten Schweißparametern, mit einem an einem Roboter befestigten Schweißbrenner, der während des Schweißprozesses entlang einer vorgegebenen Schweißbahn über das Werkstück führbar ist, wobei der Schweißbrenner mit einer Schweißstromquelle verbunden ist, welche Schweißstromquelle eine Steuereinrichtung zur Steuerung des Schweißprozesses mit vorgegebenen Schweißparametern in Abhängigkeit der Position entlang der Schweißbahn aufweist.

Die vorliegende Erfindung bezieht sich hauptsächlich auf automatisierte, robotergestützte Schweißverfahren und Schweißvorrichtungen, bei welchen der Schweißbrenner automatisch entlang einer vorgegebenen Schweißbahn über das Werkstück geführt wird oder additiv ein Werkstück fertigt (Wire-Arc Additive Manufacturing WAAM). Es sind sowohl Schweißverfahren mit abschmelzbarer Schweißelektrode (MIG/MAG-Schweißverfahren) als auch mit nichtabschmelzbarer Schweißelektrode (WIG-Schweißverfahren) umfasst. Theoretisch ist eine Anwendung auch bei manuellen Schweißverfahren denkbar. Weiters bezieht sich die Erfindung auch auf Lichtbogenlöten, wobei es im Gegensatz zum Schweißen zu keiner wesentlichen Aufschmelzung des Werkstücks kommt.

Bei Lichtbogen-Schweißprozessen wird zur Bildung einer Schweißverbindung meist ein Zusatzmaterial aufgeschmolzen, das zu schweißende Werkstück aufgeschmolzen und eine Schweißnaht geformt. Die Qualität der Schweißverbindung ist in hohem Grade vom zeitlichen Verlauf des Abkühlvorgangs der Schweißnaht abhängig. Dieser zeitliche Verlauf des Abkühlvorgangs ist von der eingebrachten Wärmeenergie, der Temperatur des Werkstücks und der Spannvorrichtungen sowie von der lokalen Geometrie des Werkstücks und der Spannvorrichtungen, der Umgebungstemperatur bzw. Werkstück-Grundtemperatur und den jeweiligen Materialeigenschaften (spezifische Wärmekapazität und Wärmeleitfähigkeit) abhängig. Die Geometrie des Werkstücks und die Geometrie und Anordnung von Spannvorrichtungen rund um die Schweißnaht in Verbindung mit den physikalischen Parametern der verschiedenen Materialien beeinflussen und definieren hauptsächlich den Abkühlvorgang einer Schweißnaht. Bei bekannten Schweißverfahren wird die Geometrie des Werkstücks und die Geometrie und Anordnung von Spannvorrichtungen gar nicht oder nur zu einem gewissen Grad berücksichtigt, indem Testschweißungen an Testwerkstücken durchgeführt und die Schweißparameter an die jeweilige Kühlsituation entsprechend angepasst werden. Derartige Verfahren sind jedoch relativ zeitaufwändig und erfordern das Wissen entsprechender Schweißexperten, sind nicht reproduzierbar und nicht automatisierbar. Darüber hinaus ist es bei Einzelbauteilen nicht möglich, vorher Testschweißungen durchzuführen. Quantitativ ist die Kühlsituation aber nicht bekannt.

Speziell bei dickeren Werkstücken oder sehr empfindlichen Werkstücklegierungen ist es bekannt, die Werkstücktemperatur vor dem Schweißprozess zu messen, wodurch indirekt die Abkühlgeschwindigkeit der Schweißnaht und somit die metallurgischen Eigenschaften überwacht werden. Wenn die Werkstücktemperatur nicht innerhalb eines zulässigen Bereichs liegt, muss mit dem Schweißprozess gewartet werden, bis das Werkstück die maximal zulässige Werkstücktemperatur unterschritten hat oder das Werkstück mittels Heizungen erwärmt werden, bis das Werkstück die minimal notwendige Werkstücktemperatur überschritten hat. Mit diesen Maßnahmen kann sichergestellt werden, dass die Qualität der Schweißverbindung bei vorliegender normaler Kühlung gegeben ist. Bei dünnwandigen Werkstücken oder weniger empfindlichen Werkstücklegierungen ist eine Messung der Temperatur des Werkstücks nicht üblich und ein Vorheizen des Werkstücks aufgrund der hohen Kosten und des Zeitaufwandes dafür unerwünscht.

Des Weiteren gibt es Verfahren, bei welchen das Temperaturfeld auf der abkühlenden Schweißnaht beobachtet wird, um eventuelle Qualitätsprobleme zu detektieren.

Aus der WO 2018/011243 A1 ist ein Verfahren zur Festlegung von Schweißparametern für einen Schweißprozess bekannt geworden, bei dem die Schweißparameter automatisch anhand vorher an Testwerkstücken aufgenommenen idealen Schweißparametern in Abhängigkeit der aktuellen Lage und Anordnung des Werkstücks in Bezug auf den Erdbeschleunigungsvektor und den aktuellen Tangentialvektor der Schweißbahn festgelegt werden. Obgleich erwähnt wird, dass die Kühlsituation berücksichtigt werden kann, werden keine Details bekanntgegeben, wie eine Berücksichtigung der realen Kühlsituation des Werkstücks bei der automatischen Festlegung von Schweißparametern erfolgen soll.

Die US 2015/0375325 A1 beschreibt ein Verfahren, bei dem vor dem Schweißvorgang die Temperatur oder eine Temperaturänderung des Werkstücks erfasst wird und in Abhängigkeit der gemessenen Temperatur Schweißparameter entsprechend ausgewählt werden. Durch die Berücksichtigung der aktuellen Temperaturen und eine entsprechende Anpassung der Schweißparameter kann die in das Werkstück einzubringende Wärme an die aktuelle Temperatur angepasst und die Überschreitung einer maximal zulässigen Temperatur verhindert werden.

Die WO 2013/113993 A1 (offenbarend alle Merkmale und Schritte des Oberbegriffes der Ansprüche 1 und 11) beschreibt ein Verfahren der gegenständlichen Art, wobei zur Erzielung einer bestimmten Schweißqualität bzw. einer gewünschten metallurgischen Struktur die Schweißparameter in Abhängigkeit eines gewünschten Kühlverhaltens angepasst werden.

Die US 4,817,020 A beschreibt einen Laserbearbeitungsprozess, beispielsweise Laserschweißprozess, bei dem während des Bearbeitungsprozesses die Kühlrate ermittelt und in Echtzeit die Bearbeitungsparameter daran angepasst werden.

Die Aufgabe der vorliegenden Erfindung besteht darin, ein oben genanntes Verfahren zur Festlegung von Schweißparametern und eine Schweißvorrichtung zur Durchführung eines Schweißprozesses an einem Werkstück mit festgelegten Schweißparametern zu schaffen, wobei die tatsächliche Kühlsituation am realen Werkstück berücksichtigt wird, um die Schweißqualität und Reproduzierbarkeit der Schweißung verbessern zu können. Das Verfahren und die Vorrichtung sollen möglichst einfach und kostengünstig realisierbar sein und es sollen keine teuren Schweißexperten beigezogen oder vorherige Testschweißungen an Testwerkstücken durchgeführt werden müssen. Nachteile bekannter Verfahren und Vorrichtungen sollen vermieden oder zumindest reduziert werden. Gelöst wird die erfindungsgemäße Aufgabe in verfahrensmäßiger

Hinsicht durch die im kennzeichnenden Teil des Anspruchs 1 definierten Schritte, wobei vor Durchführung des Schweißprozesses zumindest ein die Abkühlung repräsentierender Parameter in Abhängigkeit der Position entlang der Schweißbahn aufgenommen wird, und der zumindest eine die Abkühlung repräsentierende Parameter entlang der Schweißbahn bei der Festlegung optimierter Schweißparameter in Abhängigkeit der Position entlang der Schweißbahn für den Schweißprozess berücksichtigt wird. Es ist vorgesehen, vor dem Schweißprozess das Abkühlverhalten an der Oberfläche des realen Werkstücks entlang der Schweißbahn unter Berücksichtigung der Geometrie des Werkstücks samt daran angeordneten Spannvorrichtungen zu erfassen und daraus zumindest einen geeigneten Parameter, der die jeweilige Kühlsituation in Form einer geeigneten Beschreibungsgröße entlang der vorgesehenen Schweißbahn repräsentiert, zu ermitteln und diesen beim nachfolgenden Schweißprozess zu berücksichtigen. Vor der Durchführung des Schweißprozesses bedeutet zeitlich vor dem Schweißprozess oder auch während des Schweißprozesses aber vorlaufend zum Schweißprozess. Die Kühlsituation wird unter anderem von Materialeigenschaften und Dimensionen (Abmessungen) der Werkstücke, von der Nahtgeometrie, vom Spalt zwischen den zu fügenden Werkstücken, der Grundtemperatur der Werkstücke, den Materialeigenschaften, der Größe und Anordnung der Spannvorrichtungen und der Umgebungstemperatur, welche ja die Werkstück-Grundtemperatur bestimmt, beeinflusst. Auch wird die Werkstück-Grundtemperatur durch einen Schweißprozess beeinflusst und kann Einfluss auf die nachfolgenden Schweißprozesse haben, sofern das Werkstück vor dem nachfolgenden Schweißprozess noch nicht ausgekühlt ist. Bei additiven Schweißverfahren (WAAM) kann das Abkühlverhalten der letzten Lage beim schichtweisen Aufbau eines Werkstücks für die Bestimmung der Kühlung für die Schweißung der nächsten Lage herangezogen werden. Bei der Aufnahme des zumindest einen die Abkühlung repräsentierenden Parameter wird das reale Werkstück nicht oder nicht wesentlich aufgeschmolzen oder das Gefüge verändert. Über den zumindest einen die Abkühlung repräsentierenden neu ermittelten Parameter kann der nachfolgende Schweißprozess entsprechend besser gesteuert werden und es können bestimmte Schweißparameter, wie zum Beispiel die Schweißleistung, die Schweißgeschwindigkeit, oder andere Schweiß- oder Bewegungsparameter entsprechend angepasst bzw. optimiert werden, wodurch die Schweißqualität erhöht und vor allem eine bessere Reproduzierbarkeit der Schweißung erreicht werden kann. Der höhere Aufwand besteht lediglich in der Aufnahme des zumindest einen die Abkühlung repräsentierenden Parameters vor Durchführung des Schweißprozesses, welche jedoch auch wesentlich rascher als der Schweißprozess und auch an einem virtuellen, dem realen Werkstück nachgebildeten Werkstück durch eine Simulation vorgenommen werden kann. Durch die Berücksichtigung der realen Kühlsituation bei der Festlegung der optimierten Schweißparameter für den Schweißprozess wird eine Kompensation eines allenfalls störenden Einflusses der Geometrie des Werkstücks oder der Geometrie einer Spannvorrichtung entlang der Schweißbahn und somit eine höhere Schweißqualität erzielt. Wird also festgestellt, dass die tatsächliche Kühlsituation von der normalen Kühlsituation in einem störenden Ausmaß abweicht, dann werden Kompensations- bzw. Gegenmaßnahmen eingeleitet. Die einfachsten Gegenmaßnahmen bei abweichender Kühlsituation beinhalten eine Anpassung der Schweißparameter. Beispielsweise kann durch eine Erhöhung der Schweißleistung einer lokalen stärkeren Kühlung entgegengewirkt werden. Alternativ können der Abstand zwischen Schweißbrenner und Werkstück, der Anstellwinkel, die Schweißgeschwindigkeit, die relative Positionierung des Schweißbrenners zum Werkstück und weitere Prozessparameter geändert werden, um eine Schweißnaht mit optimaler Qualität (sogenannte IO- oder "In Ordnung"-Schweißnaht) zu erhalten. Die Gegenmaßnahmen können auch eine aktive, lokale Werkstückerwärmung oder Werkstückkühlung beinhalten, wobei diese beispielsweise während eines Reinigungsvorganges vor dem Schweißprozess angewendet werden könnten. Eine weitere Gegenmaßnahme kann beispielsweise auch die Veränderung der Spannvorrichtungen sein, womit die Wärmeabfuhr zwischen Werkstück und Umgebung verändert wird. Speziell bei der automatischen Festlegung optimierter Schweißparameter aus idealen Schweißparametern, welche vorher von Experten an Testwerkstücken herausgefunden wurden, ist die Berücksichtigung der realen Kühlsituation des realen Werkstücks wesentlich und von Vorteil. Bevorzugt werden zumindest zwei die Abkühlung repräsentierende Parameter entlang der Schweißbahn aufgenommen und bei der Festlegung optimierter Schweißparameter in Abhängigkeit der Position entlang der Schweißbahn berücksichtigt, wobei ein die Abkühlung repräsentierender Parameter die Werkstück-Grundtemperatur entlang der Schweißbahn ist.

Gemäß einer Ausführungsform der Erfindung wird vor Durchführung des Schweißprozesses das Werkstück entlang der Schweißbahn mit einer Wärmequelle aufgewärmt und der zumindest eine die Abkühlung repräsentierende Parameter entlang der Schweißbahn mit Hilfe zumindest einer Detektionseinrichtung aufgenommen. Mit einer geeigneten und wohl definierten Wärmequelle mit bekannter Leistungsdichteverteilung und einer geeigneten Detektionseinrichtung zur Ermittlung der Temperatur an der Oberfläche des Werkstücks entlang der Schweißbahn kann also eine Beschreibungsgröße für die lokale Kühlung entlang der Schweißbahn ermittelt werden. Aus der Kenntnis dieser Abkühlungsinformation werden beim Schweißprozess Korrekturen der Schweißparameter abgeleitet, indem diese Abkühlungsinformation entsprechend berücksichtigt wird. Die Wärmequelle kann z.B. durch Laser, WIG-, Plasma-, oder Gasbrenner gebildet sein und weist eine bekannte Leistungsdichteverteilung auf. Die in das Werkstück eingebrachte Energie der Wärmequelle, die örtliche Verteilung der Wärmeeinbringung und die Bewegungsgeschwindigkeit werden entsprechend auf die Leistung des nachfolgenden Schweißprozesses und die jeweilige Schweißaufgabe abgestimmt. Dabei wird die verwendete Streckenenergie, d.h. der Faktor Leistung geteilt durch Bewegungsgeschwindigkeit, so gewählt, dass es zu keiner oder nur zu einer geringen Aufschmelzung des Werkstücks und zu keinen Veränderungen des Gefüges oder der Geometrie des Werkstücks kommt, andererseits aber eine ausreichende Temperaturveränderung für die verwendete Detektionseinrichtung resultiert. Werden unterschiedliche Wärmequellen oder Detektionseinrichtungen bei Testwerkstücken zur Auffindung idealer Schweißparameter und am realen Werkstück verwendet, dann müssen diese kalibriert werden, um eine Vergleichbarkeit der Ergebnisse garantieren zu können.

Beispielsweise kann das Werkstück entlang der Schweißbahn impulsförmig aufgewärmt werden, vorzugsweise auf eine Temperatur unterhalb der Schmelztemperatur des Werkstücks, und mit Hilfe der zumindest einen Detektionseinrichtung die Antwort auf den Wärmeimpuls aufgenommen und daraus bestimmte Parameter, welche das Abkühlverhalten des Werkstücks entlang der Schweißbahn repräsentieren, abgeleitet oder berechnet werden.

Alternativ oder zusätzlich dazu kann das Werkstück auch entlang der Schweißbahn mit einer Lichtquelle, insbesondere einer Laserstrahlquelle, als Wärmequelle aufgewärmt werden. Die Intensität der Lichtquelle, insbesondere Laserstrahlquelle, wird so gewählt, dass es zu keiner störenden Aufschmelzung bzw. Gefügeveränderung im Werkstück kommt.

Der zumindest eine die Abkühlung repräsentierende Parameter entlang der Schweißbahn kann beispielsweise mit Hilfe einer Wärmebildkamera, insbesondere einer Infrarotkamera, als Detektionseinrichtung berührungslos aufgenommen werden. Genauso wie bei der örtlichen Verteilung der Wärme der Wärmequelle gibt es auch eine örtliche Temperaturverteilung mit der Detektionseinrichtung erfassten Gebiet. Idealerweise wird mit der Wärmebildkamera die Temperaturverteilung aller beteiligter Werkstücke und Komponenten, wie beispielsweise Spannvorrichtungen, entlang und in einer Umgebung um die Schweißbahn aufgenommen bzw. gemessen. Die örtliche Ausdehnung der Detektion entspricht vorzugsweise der Größe der Wärmeeinflusszone bzw. der Ausdehnung des Werkstücks bzw. der Werkstücke durch die zumindest eine Wärmequelle.

Darüber hinaus kann der zumindest eine die Abkühlung repräsentierende Parameter entlang der Schweißbahn mit Hilfe zumindest eines Temperatursensors als Detektionseinrichtung an der Oberfläche des Werkstücks aufgenommen werden. Dies stellt eine einfachere und kostengünstigere Lösung als die Verwendung einer Wärmebildkamera bei gleichzeitig einfacherer Auswertung dar. Für bestimmte Anwendungen kann aber eine Detektion mit Hilfe von Temperatursensoren oder auch einem Array mehrerer Temperatursensoren ausreichen.

Gemäß einem weiteren Merkmal der Erfindung kann zusätzlich zur, insbesondere während der, Aufzeichnung des zumindest einen die Abkühlung repräsentierenden Parameters entlang der Schweißbahn auch die Werkstück-Grundtemperatur aufgenommen werden. Dadurch kann die Werkstück-Grundtemperatur beim Erfassen des Abkühlverhaltens des Werkstücks berücksichtigt werden. Dies kann beispielsweise beim Schweißen unter extremen Umgebungstemperaturen einen Vorteil bringen.

Wenn der zumindest eine die Abkühlung repräsentierende Parameter entlang der Schweißbahn während eines vor dem Schweißprozess durchgeführten Reinigungsprozess, insbesondere eines Oberflächenplasmabearbeitungsprozesses, aufgenommen wird, kann Zeit gespart werden, da die Aufnahme des die Abkühlung repräsentierenden Parameters gleichzeitig mit dem ohnedies vorgenommenen Reinigungsprozess aufgenommen wird.

Neben den oben beschriebenen Verfahren kann vor Durchführung des Schweißprozesses auch eine virtuelle Nachbildung des Werkstücks entlang einer der Schweißbahn entsprechenden virtuellen Schweißbahn mit einer virtuellen Wärmequelle aufgewärmt werden und der zumindest eine die Abkühlung repräsentierende Parameter entlang der virtuellen Schweißbahn mit Hilfe zumindest einer virtuellen Detektionseinrichtung aufgenommen werden, also berechnet bzw. simuliert werden. Die virtuelle Nachbildung kann näherungsweise über die Definition des Querschnitts der Schweißanordnung an mehreren Punkten der Schweißbahn erfolgen und dazwischen durch Interpolation angenähert werden. Die Bestimmung des Abkühlverhaltens kann also an einem virtuellen Werkstück simuliert werden. Beispielsweise kann ein Benutzer anhand einer entsprechenden Software oder Smartphone-App das reale Werkstück samt Spannvorrichtungen nachbilden und dadurch eine Kühlsituation definieren. Anhand entsprechend hinterlegter Lösungen und Berechnungen kann das Abkühlverhalten nachgebildet und können entsprechende die Abkühlung des virtuellen Werkstücks repräsentierende Parameter entlang der virtuellen Schweißbahn aufgenommen werden. Findet die Ermittlung des Abkühlverhaltens in einer Simulation statt, so kann die Leistung bzw. Leistungsverteilung praktisch frei gewählt werden. Außerdem können auch nichtlineare Effekte in der Temperaturleitung im Werkstück realitätsnahe mitsimuliert werden. Bei der Simulation können Probleme, welche bei einer realen Messung durch die Bewegung der Wärmequelle und der Detektionseinrichtung über das Werkstück entstehen können, und deren Beeinflussung eliminiert werden. Bei der Simulation kann die exakte Temperatur an jeder Stelle des Werkstücks ermittelt werden. Die Informationen über das thermische Verhalten verschiedener Werkstücke kann davor anhand von Testwerkstücken praktisch ermittelt werden. In der Simulation kann ein Modell des realen Schweißprozesses als virtuelle Wärmequelle verwendet werden und die beobachtete Kühlsituation mit zumindest einem die Abkühlung repräsentierenden Parameter (vorzugsweise zumindest zwei die Abkühlung repräsentierenden Parameter, wobei ein Parameter die Werkstück-Grundtemperatur ist) verwendet werden, um die Modellparameter so lange zu verbessern, bis ein ideales Schweißergebnis vorliegt.

Ebenso ist es möglich, vor Durchführung des Schweißprozesses aus einer virtuellen Nachbildung des Werkstücks mit vorgegebenen Umgebungssituationen, beispielsweise Spannvorrichtungen, den zumindest einen die Abkühlung repräsentierenden Parameter entlang einer der Schweißbahn entsprechenden virtuellen Schweißbahn aus gespeicherten Eigenschaften der virtuellen Nachbildung des Werkstücks in Abhängigkeit des Materials und der geometrischen Bedingungen zu bestimmen. Bei dieser Variante einer Simulation kann ohne virtuelle Wärmequelle aus den Materialeigenschaften und geometrischen Bedingungen des Werkstücks und der Spannvorrichtungen der zumindest eine die Abkühlung repräsentierende Parameter bestimmt werden, da die aktuelle Kühlungssituation mit bekannten die Abkühlung repräsentierenden Parametern aus bekannten "Bausteinen" abgeleitet wird. Ein solches Verfahren kann beispielsweise mit einem Programm auf einem Computer, dem Smartphone oder einer Robotersteuerung realisiert und somit auch von einem nicht notwendigerweise gut ausgebildeten Schweißer einfach die Kühlsituation abgeschätzt und berücksichtigt werden.

Der Vorgang der Aufzeichnung des zumindest einen die Abkühlung repräsentierenden Parameters entlang der Schweißbahn kann dabei mit einer Geschwindigkeit durchgeführt werden, welche höher als oder gleich groß wie die Schweißgeschwindigkeit während des Schweißprozesses ist. Wenn die Geschwindigkeit höher gewählt wird, kann die Zeit für die Erfassung des Abkühlverhaltens des Werkstücks verringert werden.

Dabei kann beispielsweise die mittlere Abkühlungsrate als ein die Abkühlung repräsentierender Parameter aufgenommen werden. Die mittlere Abkühlungsrate stellt einen relativ einfach erfassbaren und verarbeitbaren Parameter dar. Andere Parameter können beispielsweise aus den aufgenommenen Wärmebildkameras mit speziellen Bildverarbeitungsverfahren extrahiert und abgeleitet werden.

Bei der Über- und bzw. oder Unterschreitung vorgegebener Grenzwerte für einen die Abkühlung repräsentierenden Parameter entlang der Schweißbahn kann eine Warnung ausgegeben und bzw. oder eine Mitteilung gespeichert werden. Dadurch kann auf Stellen entlang der Schweißbahn hingewiesen werden, an denen das thermische Management besonders kritisch ist. Die Warnung kann in Form akustischer, optischer oder mechanischer Information an die interessierende Person oder Stelle abgegeben werden.

Gelöst wird die erfindungsgemäße Aufgabe auch durch eine Schweißvorrichtung entsprechend dem Anspruch 11, wobei eine Aufnahmeeinrichtung zur Aufnahme zumindest eines die Abkühlung repräsentierenden Parameters in Abhängigkeit der Position entlang der Schweißbahn vor Durchführung des Schweißprozesses vorgesehen ist, und die Steuereinrichtung mit der Aufnahmeeinrichtung verbunden und zur Steuerung des Schweißprozesses mit optimierten Schweißparametern in Abhängigkeit der Position entlang der Schweißbahn unter Berücksichtigung des zumindest einen die Abkühlung repräsentierenden Parameters entlang der Schweißbahn ausgebildet ist. Je nach Ausführung der Aufnahmeeinrichtung ist eine solche Schweißvorrichtung entsprechend aufzurüsten. Viele Komponenten, wie zum Beispiel Kameras, Temperatursensoren und natürlich auch entsprechende Steuereinrichtungen sind jedoch bei vielen Schweißvorrichtungen ohnedies vorhanden und brauchen für die beschriebene Verwendung lediglich adaptiert bzw. programmiert zu werden. Zu den weiteren durch die erfindungsgemäße Schweißvorrichtung erzielbaren Vorteilen wird auf die obige Beschreibung des erfindungsgemäßen Verfahrens zur Festlegung von Schweißparametern für einen Schweißprozess an einem Werkstück verwiesen.

Gemäß einem Merkmal der Erfindung beinhaltet die Aufnahmeeinrichtung zur Aufzeichnung des zumindest einen die Abkühlung repräsentierenden Parameters entlang der Schweißbahn eine Wärmequelle zur Aufwärmung des Werkstücks entlang der Schweißbahn und zumindest eine Detektionseinrichtung zur Aufnahme des zumindest einen die Abkühlung repräsentierenden Parameters entlang der Schweißbahn. Die Schweißvorrichtung wird mit aktivierter Wärmequelle und Detektionseinrichtung vor Durchführung des Schweißprozesses oder während des Schweißprozesses vorlaufend zum Schweißprozess entlang der Schweißbahn bewegt, um zumindest einen die Abkühlung repräsentierenden Parameter aufnehmen zu können, der beim nachfolgenden Schweißprozess entsprechend berücksichtigt wird.

Die Wärmequelle zur Aufwärmung des Werkstücks entlang der Schweißbahn kann durch eine Lichtquelle, insbesondere eine Laserstrahlquelle, gebildet sein. Dies stellt eine einfache und relativ leicht realisierbare Form der Wärmequelle dar.

Die Wärmequelle ist vorzugsweise zur Aufwärmung des Werkstücks entlang der Schweißbahn auf eine Temperatur unterhalb der Schmelztemperatur des Werkstücks und auch unterhalb jener Temperatur, durch welche das Gefüge des Werkstücks beeinflusst wird, ausgebildet.

Zumindest eine Detektionseinrichtung kann beispielsweise durch eine Wärmebildkamera, insbesondere eine Infrarotkamera, gebildet sein.

Weiters kann zumindest eine Detektionseinrichtung durch zumindest einen Temperatursensor zur Messung der Temperatur der Oberfläche des Werkstücks entlang der Schweißbahn gebildet sein. Der zumindest eine Temperatursensor kann einerseits zur Bestimmung des Kühlverhaltens und andererseits auch zur Bestimmung der Werkstücktemperatur vor dem Schweißprozess verwendet werden. Wie bereits oben erwähnt, beeinflusst die Temperatur des Werkstücks ja auch das Abkühlverhalten.

Wenn zumindest ein Temperatursensor zur Messung der Werkstück-Grundtemperatur vorgesehen ist, kann diese Werkstück-Grundtemperatur bei der Aufnahme des zumindest einen die Abkühlung repräsentierenden Parameters entlang der Schweißbahn berücksichtigt werden.

Die Aufnahmeeinrichtung zur Aufzeichnung des zumindest einen die Abkühlung repräsentierenden Parameters entlang der Schweißbahn kann auch eine virtuelle Wärmequelle zur Aufwärmung einer virtuellen Nachbildung des Werkstücks entlang einer der Schweißbahn entsprechenden virtuellen Schweißbahn und zumindest eine virtuelle Detektionseinrichtung zur Aufnahme des zumindest einen die Abkühlung repräsentierenden Parameters entlang der virtuellen Schweißbahn beinhalten. Bei einem virtuellen Schweißprozess kann die virtuelle Wärmequelle auch durch den virtuellen Schweißprozess gebildet sein.

Die vorliegende Erfindung wird anhand der beigefügten Zeichnungen näher erläutert. Darin zeigen:
- Fig. 1: eine schematische Darstellung einer Schweißvorrichtung, welche zur Aufnahme eines die Abkühlung repräsentierenden Parameters entlang der Schweißbahn eines Werkstücks vor der Durchführung des Schweißprozesses ausgebildet ist;
- Fig. 2: ein Blockschaltbild einer Ausführungsform einer Aufnahmeeinrichtung zur Aufnahme eines die Abkühlung repräsentierenden Parameters entlang der Schweißbahn;
- Fig. 3: ein schematisches Blockschaltbild einer virtuellen Aufnahmeeinrichtung zur Aufzeichnung zumindest eines die Abkühlung repräsentierenden Parameters entlang der virtuellen Schweißbahn eines virtuellen Werkstücks;
- Fig. 4: eine schematische Darstellung einer Schweißvorrichtung während der Durchführung eines Schweißprozesses unter Berücksichtigung zumindest eines vor dem Schweißprozess aufgenommenen die Abkühlung repräsentierenden Parameters bei der Festlegung der Schweißparameter;
- Fig. 5A bis 5C: verschiedene Einspannsituationen eines Werkstücks zur Veranschaulichung der resultierenden unterschiedlichen Abkühlverhalten entlang der Schweißbahn;
- Fig. 6A und 6B: zwei zeitliche Abkühlkurven bei unterschiedlichem Abkühlverhalten und unterschiedlicher Temperatur des Werkstücks; und
- Fig. 7: den zeitlichen Verlauf eines vor dem Schweißprozess durchgeführten Verfahrens zur Aufnahme zumindest eines die Abkühlung repräsentierenden Parameters entlang der Schweißbahn eines Werkstücks und dem nachfolgenden Schweißprozess unter Berücksichtigung des zumindest einen die Abkühlung repräsentierenden Parameters bei der Festlegung der Schweißparameter.

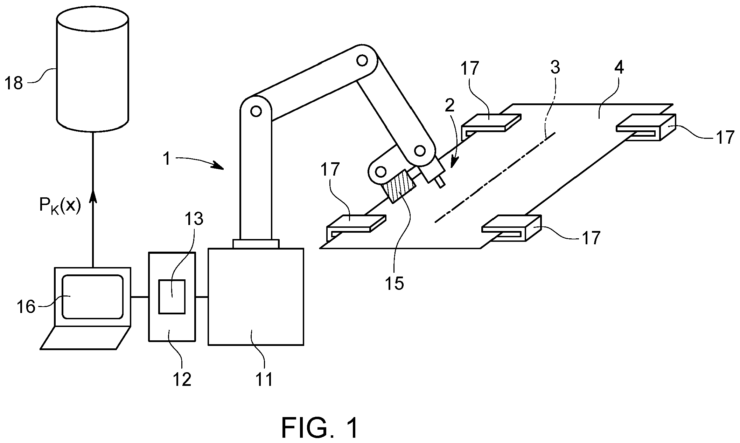

Fig. 1 zeigt eine schematische Darstellung einer Schweißvorrichtung 1, welche zur Aufnahme eines die Abkühlung repräsentierenden Parameters P_{K}(x) entlang der Schweißbahn 3 eines Werkstücks 4 vor der Durchführung eines Schweißprozesses ausgebildet ist. Die Schweißvorrichtung 1 dient zu Durchführung eines Schweißprozesses an einem Werkstück 4 mit festgelegten Schweißparametern Pᵢ(x) in Abhängigkeit der Position x entlang der Schweißbahn 3. Zu diesem Zweck ist ein Schweißbrenner 2 an einem Roboter 11 befestigt, der den Schweißbrenner 2 während des Schweißprozesses entlang einer vorgegebenen Schweißbahn 3 über das Werkstück 4 führt und eine Schweißverbindung zwischen zwei oder mehreren Werkstücken 4 oder eine Beschichtung eines Werkstücks 4 herstellt. Der Schweißbrenner 2 ist mit der Schweißstromquelle 12 verbunden, deren Steuereinrichtung 13 den Schweißprozess und die entsprechenden festgelegten Schweißparameter Pᵢ(x) steuert bzw. regelt. Während der Bearbeitung wird das Werkstück 4 über Spannvorrichtungen 17 in der gewünschten Position gehalten. Die Anordnung und Geometrie der Spannvorrichtungen 17, die Geometrie des Werkstücks 4 und eine Reihe anderer Faktoren, wie zum Beispiel die Temperatur des Werkstücks 4, beeinflussen das Abkühlverhalten der Schweißnaht und somit die Qualität der Schweißverbindung. Üblicherweise werden bestimmte Schweißparameter Pᵢ(x) für den Schweißprozess aufgrund von Erfahrungen oder vorausgegangenen Testschweißungen an Testwerkstücken festgelegt und der Schweißprozess unabhängig von der jeweiligen Kühlsituation durchgeführt.

Erfindungsgemäß ist nun vorgesehen, dass vor Durchführung des Schweißprozesses zumindest ein die Abkühlung repräsentierender Parameter P_{K}(x) entlang der Schweißbahn 3 aufgenommen wird, und der zumindest eine die Abkühlung repräsentierende Parameter P_{K}(x) entlang der Schweißbahn 3 bei der Festlegung optimierter Schweißparameter P_{i,opt}(x) in Abhängigkeit der Position x entlang der Schweißbahn 3 für den Schweißprozess berücksichtigt wird. Zu diesem Zweck befindet sich am Roboter 11 eine Aufnahmeeinrichtung 15, welche das Werkstück 4 vor dem Schweißprozess erwärmt und das Abkühlverhalten detektiert und daraus zumindest einen die Abkühlung repräsentierenden Parameter P_{K}(x) ableitet bzw. berechnet. Das Abkühlverhalten des Werkstücks 4 wird also unter den realen Bedingungen unter Berücksichtigung der Geometrie und Anordnungen der Spannvorrichtungen 17 und der Berücksichtigung der Geometrie des Werkstücks 4 und der Berücksichtigung der Umgebungsbedingungen analysiert, um das jeweilige Abkühlverhalten in die Festlegung der optimierten Schweißparameter P_{i,opt}(x) einfließen lassen zu können. Die Berücksichtigung der die Abkühlung repräsentierbaren Parameter P_{K}(x) bei der Festlegung der optimierten Schweißparameter P_{i,opt}(x) für ein optimales Schweißergebnis und maximale Schweißqualität kann verschiedenartigst erfolgen. Beispielsweise kann an Stellen entlang der Schweißbahn 3 des Werkstücks 4 mit gutem bzw. raschem Abkühlverhalten mit niedrigerer Schweißgeschwindigkeit oder höherer Schweißleistung vorgegangen werden, als an Stellen mit langsamerem Abkühlverhalten. Auch kann die Schweißqualität durch Vorwärmung des Werkstücks 4 an bestimmten Stellen unter Berücksichtigung des Abkühlverhaltens des Werkstücks 4 an diesen Stellen verbessert werden.

Während der Aufnahme der die Abkühlung repräsentierenden Parameter P_{K}(x) fährt der Roboter 11 mit der Aufnahmeeinrichtung 15 entlang der gewünschten Schweißbahn 3 und wärmt das Werkstück 4 auf eine Temperatur auf, welche vorzugsweise unterhalb der Schmelztemperatur des Materials des Werkstücks 4 liegt und auch unterhalb jener Temperatur, welche zu einer Gefügeänderung des Materials des Werkstücks 4 führen könnte. Im Anschluss an die Aufwärmung wird die Oberflächentemperatur des Werkstücks 4 detektiert und ausgewertet und daraus zumindest ein die Abkühlung repräsentierender Parameter P_{K}(x), zum Beispiel die Abkühlungsrate ΔT/Δt, berechnet. Die die Abkühlung repräsentierenden Parameter P_{K}(x) werden in einer Datenbank 18 bzw. einem Speicher abgelegt. Somit kann im nachfolgenden Schweißprozess eine Korrektur durch die optimierten Schweißparameter P_{i,opt}(x) unter Berücksichtigung des Abkühlverhaltens des realen Werkstücks 4 erfolgen. Der Speicher 18 kann sich an unterschiedlichen Stellen des Schweißsystems befinden und kann beispielsweise auch in die Schweißstromquelle 12 integriert sein.

Der Vorgang der Aufzeichnung des zumindest einen die Abkühlung repräsentierenden Parameters P_{K}(x) entlang der Schweißbahn 3 kann mit einer Geschwindigkeit v_{A} durchgeführt werden, die höher als oder gleich groß wie die übliche Schweißgeschwindigkeit v_{S} während des Schweißprozesses ist. Um Zeit zu sparen, kann der zumindest eine die Abkühlung repräsentierende Parameter P_{K}(x) entlang der Schweißbahn 3 auch direkt vorlaufend zum Schweißprozess oder während eines vor dem Schweißprozess durchzuführenden Reinigungsprozesses aufgenommen werden.

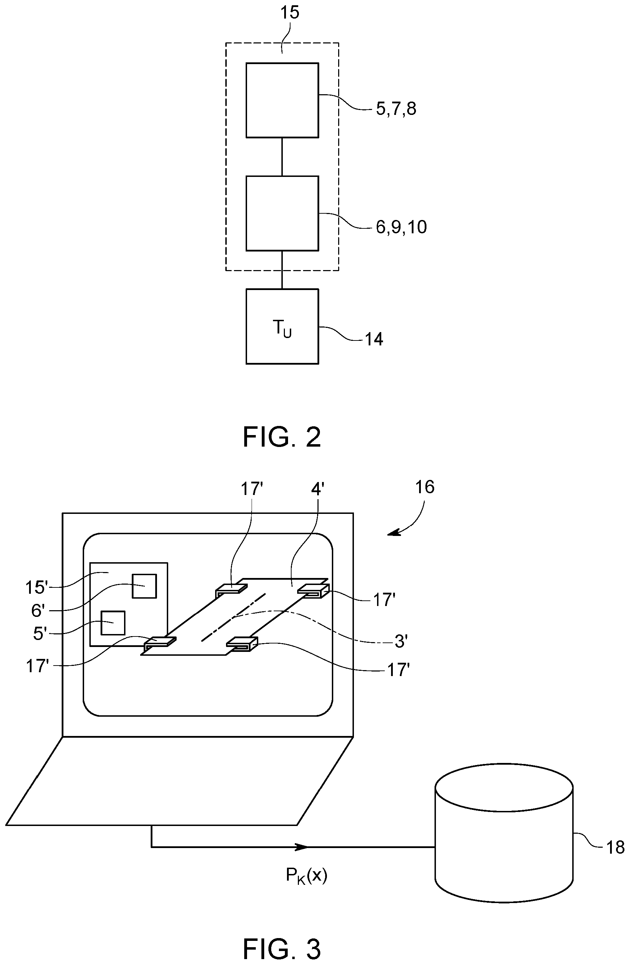

Fig. 2 zeigt ein Blockschaltbild einer Ausführungsform einer Aufnahmeeinrichtung 15 zur Aufnahme eines die Abkühlung repräsentierenden Parameters P_{K}(x) entlang der Schweißbahn 3 eines Werkstücks 4. Die Aufnahmeeinrichtung 15 beinhaltet eine Wärmequelle 5, mit der das Werkstück 4 auf eine Temperatur aufgewärmt wird, die unterhalb der Schmelztemperatur des Materials des Werkstücks 4 und unterhalb der Temperatur, bei der das Gefüge des Werkstücks 4 verändert wird, liegt. Die Aufwärmung des Werkstücks 4 entlang der Schweißbahn 3 kann beispielsweise impulsförmig erfolgen. Die Wärmequelle 5 kann durch eine Lichtquelle 7, insbesondere eine Laserstrahlquelle 8, gebildet sein. Der zumindest eine die Abkühlung repräsentierende Parameter P_{K}(x) entlang der Schweißbahn 3 wird mit Hilfe zumindest einer Detektionseinrichtung 6 berührungslos aufgenommen, welche durch eine Wärmebildkamera 9, insbesondere eine Infrarotkamera, gebildet sein kann. Anstelle oder zusätzlich zu einer Wärmebildkamera 9 kann auch zumindest ein Temperatursensor 10 oder ein Array mehrerer Temperatursensoren 10 zur Detektion der Temperatur an der Oberfläche des Werkstücks 4 verwendet werden. Zusätzlich zur Aufzeichnung des zumindest einen die Abkühlung repräsentierenden Parameters P_{K}(x) entlang der Schweißbahn 3 und insbesondere während dieser Aufzeichnung kann auch die Werkstück-Grundtemperatur T_{U} mit Hilfe zumindest eines Temperatursensors 14 aufgenommen werden.

Wenn ein die Abkühlung repräsentierender Parameter P_{K}(x) bestimmte Grenzwerte P_{KG}(x) überschreitet, könnte eine Warnung (beispielsweise in akustischer oder optischer Form) ausgegeben werden, um den Anwender auf eine unzulässige oder kritische Kühlsituation hinzuweisen. Der Anwender kann dann entsprechende Gegenmaßnahmen, wie zum Beispiel ein Versetzen von Spannvorrichtungen oder ein Vorwärmen oder Kühlen des Werkstücks 4, durchführen, um die Grenzwerte P_{KG}(x) wieder einzuhalten. Zusätzlich zur Warnung oder alternativ dazu kann auch eine entsprechende Mitteilung für Dokumentationszwecke gespeichert werden.

In Fig. 3 ist ein schematisches Blockschaltbild einer virtuellen Aufnahmeeinrichtung 15' zur Aufzeichnung zumindest eines die Abkühlung repräsentierenden Parameters P_{K}(x) entlang der virtuellen Schweißbahn 3' eines virtuellen Werkstücks 4' dargestellt. Dabei wird das virtuelle Werkstück 4' zusammen mit den virtuellen Spannvorrichtungen 17' an einem Computer 16 oder einem mobilen Endgerät, wie zum Beispiel einem Smartphone, nachgebildet und vor Durchführung des Schweißprozesses die virtuelle Nachbildung 4' des Werkstücks 4 entlang einer der Schweißbahn 3 entsprechenden virtuellen Schweißbahn 3' mit einer virtuellen Wärmequelle 5' bzw. dem virtuellen Schweißprozess selbst aufgewärmt und der zumindest eine die Abkühlung repräsentierende Parameter P_{K}(x) entlang der virtuellen Schweißbahn 3' mit Hilfe zumindest einer virtuellen Detektionseinrichtung 6' aufgenommen oder berechnet bzw. simuliert. Die die Abkühlung repräsentierenden Parameter P_{K}(x) werden in einer Datenbank 18 bzw. einem Speicher abgelegt. Die dafür notwendige Software greift dabei auf hinterlegte Informationen der Wärmeleiteigenschaften verschiedener Materialien für die Werkstücke 4 und Spannvorrichtungen 17 zurück, welche vorher ermittelt wurden. Mittels einer solchen Simulation können verschiedene Situationen vor der Durchführung des Schweißprozesses ausprobiert werden, ohne dass ein reales Werkstück 4 verwendet werden muss. Somit können einfach und rasch optimierte Schweißparameter P_{i,opt}(x) in Abhängigkeit der jeweiligen herrschenden Kühlsituation des Werkstücks 4 angepasst werden, um jeweils beste Schweißqualitäten zu erzielen.

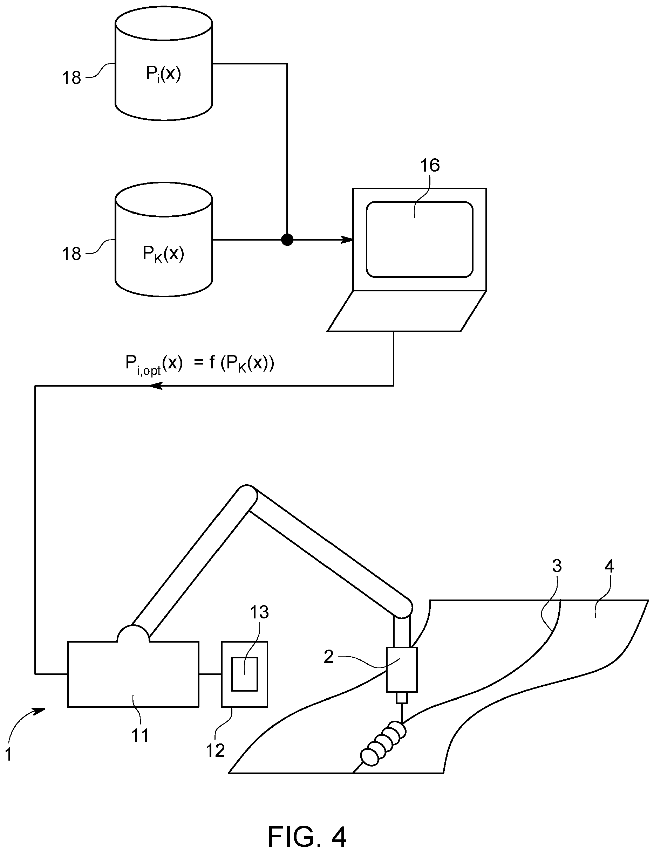

In Fig. 4 ist eine schematische Darstellung einer Schweißvorrichtung 1 während der Durchführung eines Schweißprozesses unter Berücksichtigung zumindest eines vor dem Schweißprozess aufgenommenen, die Abkühlung repräsentierenden Parameters P_{K}(x) bei der Festlegung optimierter Schweißparameter P_{i,opt}(x) dargestellt. Dabei werden die vor der Durchführung des Schweißprozesses ermittelten und in einer Datenbank 18 oder dgl. hinterlegten Parameter P_{K}(x) in Abhängigkeit der Stelle entlang der Schweißbahn 3 zur Korrektur bzw. Änderung der festgelegten Schweißparameter Pᵢ(x) berücksichtigt und somit optimierte Schweißparameter P_{i,opt}(x) ermittelt, mit welchen der Schweißprozess durchgeführt wird. Dadurch wird unter Berücksichtigung des Abkühlverhaltens des Werkstücks 4 eine optimale Qualität der Schweißnaht entlang der Schweißbahn 3 des Werkstücks erzielt. Darüber hinaus kann durch externe Maßnahmen, wie zum Beispiel das Vorheizen des Werkstücks 4, Einfluss auf das Abkühlverhalten des Werkstücks genommen werden und eine höhere Schweißqualität erreicht werden.

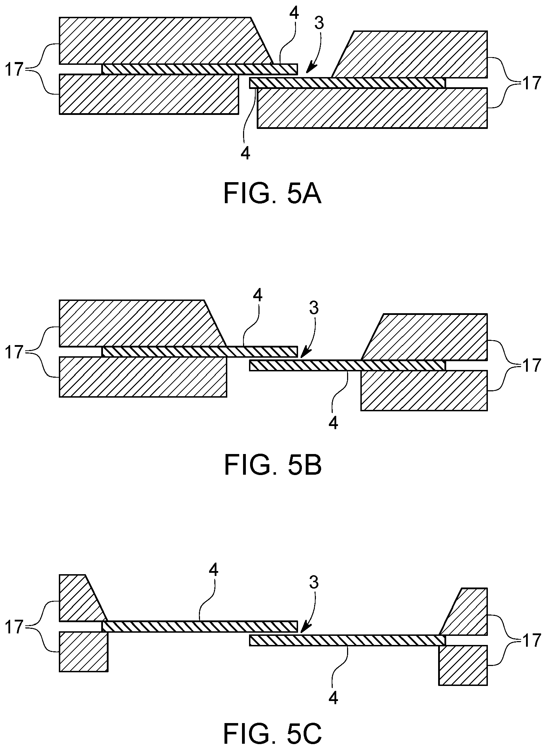

Fig. 5A bis 5C stellen verschiedene Einspannsituationen eines Werkstücks 4 zur Veranschaulichung der resultierenden unterschiedlichen Abkühlverhalten entlang der Schweißbahn 3 dar. Bei der Seitenansicht auf ein Werkstück 4 gemäß Fig. 5A sind die Spannvorrichtungen sehr nahe an der Schweißbahn 3 angeordnet. Dadurch ergibt sich eine maximale Kühlung. Bei der Variante gemäß Fig. 5B sind die Spannvorrichtungen in einem größeren Abstand zur Schweißbahn angeordnet, wodurch eine normale Kühlung der Schweißnaht resultiert. Bei der Variante gemäß Fig. 5C sind die Spannvorrichtungen 17 sehr weit von der Schweißbahn 3 entfernt angeordnet und erfassen nur einen sehr kurzen Bereich des Werkstücks 4. Bei dieser Variante resultiert ein minimaler Kühleffekt durch die Spannvorrichtungen. Diese Abbildungen veranschaulichen den Einfluss der Geometrie und Anordnung der Spannvorrichtungen 17 auf das Abkühlverhalten des Werkstücks 4 nach einem Schweißprozess. Die Kühlsituation eines Werkstücks kann also auch durch eine entsprechende Anordnung der Spannvorrichtungen 17 beeinflusst werden. Der Kühleffekt ist neben der Anordnung der Spannvorrichtungen 17 auch vom Material der Spannvorrichtungen 17 und deren Wärmeleitfähigkeit sowie der Kontaktfläche zwischen Werkstück 4 und Spannvorrichtung 17 abhängig.

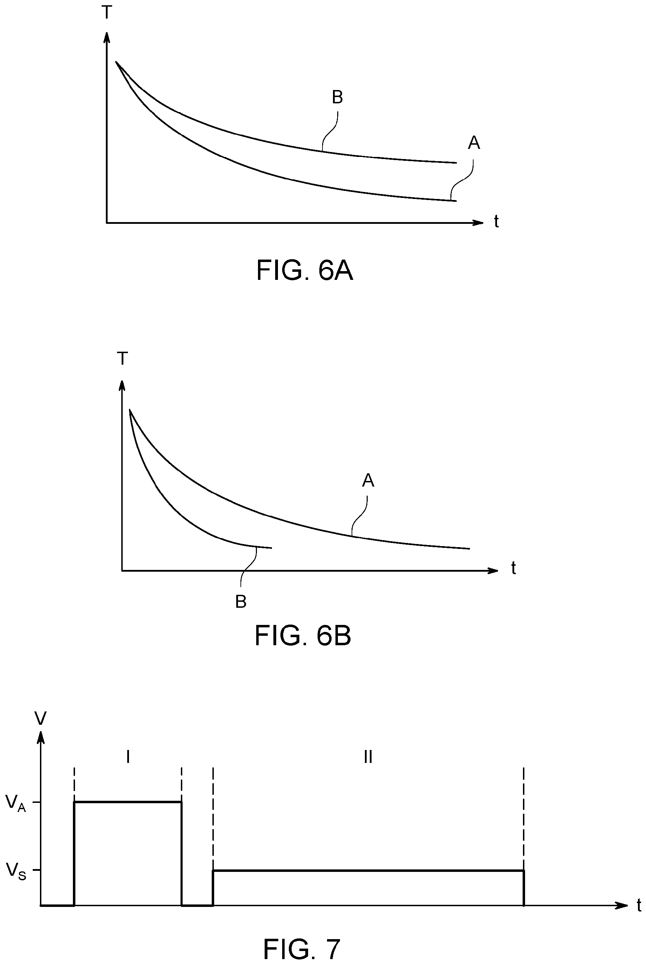

Fig. 6A und 6B zeigen zeitliche Abkühlkurven bei unterschiedlichem Abkühlverhalten und unterschiedlicher Temperatur T des Werkstücks 4. Fig. 6A zeigt den die zeitliche Abkühlkurve eines Werkstücks 4 ohne vorherige Erwärmung (Kurve A) und mit vorheriger Erwärmung (Kurve B). Figur 6B zeigt die zeitliche Abkühlung eines Werkstücks 4 bei normaler Kühlung (Kurve A) und starker Kühlung (Kurve B).

In Fig. 7 ist der zeitliche Verlauf eines vor dem Schweißprozess durchgeführten Verfahrens zur Aufnahme zumindest eines die Abkühlung repräsentierenden Parameters P_{K}(x) entlang der Schweißbahn 3 eines Werkstücks 4 und dem nachfolgenden Schweißprozess unter Berücksichtigung des zumindest einen die Abkühlung repräsentierenden Parameters P_{K}(x) bei der Festlegung der optimierten Schweißparameter P_{i,opt}(x). Wie bereits oben erwähnt, kann die Phase I der Aufnahme der die Abkühlung des Werkstücks 4 repräsentierenden Parameter P_{K}(x) auch mit einer höheren Geschwindigkeit v_{A} erfolgen als der nachfolgende Schweißprozess (Phase II), der mit einer niedrigeren Geschwindigkeit v_{S} abläuft.

## Patentansprüche

1. Verfahren zur Festlegung von Schweißparametern (Pᵢ(x)) für einen Schweißprozess an einem Werkstück (4), bei dem ein an einem Roboter (11) befestigter Schweißbrenner (2) entlang einer vorgegebenen Schweißbahn (3) über das Werkstück (4) geführt und in Abhängigkeit der Position (x) entlang der Schweißbahn (3) vorgegebene Schweißparameter (Pᵢ(x)) zur Bearbeitung des Werkstücks (4) eingestellt werden, **dadurch gekennzeichnet, dass** vor Durchführung des Schweißprozesses zumindest ein die Abkühlung repräsentierender Parameter (P_{K}(x)) in Abhängigkeit der Position (x) entlang der Schweißbahn (3) aufgenommen wird, und der zumindest eine die Abkühlung repräsentierende Parameter (P_{K}(x)) entlang der Schweißbahn (3) bei der Festlegung optimierter Schweißparameter (P_{i,opt}(x)) in Abhängigkeit der Position (x) entlang der Schweißbahn (3) für den Schweißprozess berücksichtigt wird.

2. Verfahren nach Anspruch 1, **dadurch gekennzeichnet, dass** vor Durchführung des Schweißprozesses das Werkstück (4) entlang der Schweißbahn (3) mit einer Wärmequelle (5) aufgewärmt wird und der zumindest eine die Abkühlung repräsentierende Parameter (P_{K}(x)) entlang der Schweißbahn (3) mit Hilfe zumindest einer Detektionseinrichtung (6) aufgenommen wird.

3. Verfahren nach Anspruch 2, **dadurch gekennzeichnet, dass** das Werkstück (4) entlang der Schweißbahn (3) impulsförmig aufgewärmt wird, vorzugsweise auf eine Temperatur unterhalb der Schmelztemperatur (T_{S}) des Werkstücks (4).

4. Verfahren nach Anspruch 2 oder 3, **dadurch gekennzeichnet, dass** zusätzlich zur, insbesondere während der, Aufzeichnung des zumindest einen die Abkühlung repräsentierenden Parameters (P_{K}(x)) entlang der Schweißbahn (3) die Werkstück-Grundtemperatur (T_{U}) aufgenommen wird.

5. Verfahren nach einem der Ansprüche 2 bis 4, **dadurch gekennzeichnet, dass** der zumindest eine die Abkühlung repräsentierende Parameter (P_{K}(x)) entlang der Schweißbahn (3) während eines vor dem Schweißprozess durchgeführten Reinigungsprozess, insbesondere eines Oberflächenplasmabearbeitungsprozesses, aufgenommen wird.

6. Verfahren nach Anspruch 1, **dadurch gekennzeichnet, dass** vor Durchführung des Schweißprozesses eine virtuelle Nachbildung (4') des Werkstücks (4) entlang einer der Schweißbahn (3) entsprechenden virtuellen Schweißbahn (3') mit einer virtuellen Wärmequelle (5') aufgewärmt wird und der zumindest eine die Abkühlung repräsentierende Parameter (P_{K}(x')) entlang der virtuellen Schweißbahn (3') mit Hilfe zumindest einer virtuellen Detektionseinrichtung (6') aufgenommen wird.

7. Verfahren nach Anspruch 1, **dadurch gekennzeichnet, dass** vor Durchführung des Schweißprozesses aus einer virtuellen Nachbildung (4') des Werkstücks (4) mit vorgegebenen Umgebungssituationen, beispielsweise Spannvorrichtungen (17), der zumindest eine die Abkühlung repräsentierende Parameter (P_{K}(x')) entlang einer der Schweißbahn (3) entsprechenden virtuellen Schweißbahn (3') aus gespeicherten Eigenschaften der virtuellen Nachbildung (4') des Werkstücks (4) in Abhängigkeit des Materials und der geometrischen Bedingungen bestimmt wird.

8. Verfahren nach einem der Ansprüche 1 bis 7, **dadurch gekennzeichnet, dass** der Vorgang der Aufzeichnung des zumindest einen die Abkühlung repräsentierenden Parameters (P_{K}(x)) entlang der Schweißbahn (3) mit einer Geschwindigkeit (v_{A}) durchgeführt wird, welche höher als oder gleich groß wie die Schweißgeschwindigkeit (v_{S}) während des Schweißprozesses ist.

9. Verfahren nach einem der Ansprüche 1 bis 8, **dadurch gekennzeichnet, dass** die mittlere Abkühlungsrate (ΔT/Δt) als ein die Abkühlung repräsentierender Parameter (P_{K}(x)) aufgenommen wird.

10. Verfahren nach einem der Ansprüche 1 bis 9, **dadurch gekennzeichnet, dass** bei Über- und bzw. oder Unterschreitung vorgegebener Grenzwerte (P_{KG}(x)) für den die Abkühlung repräsentierenden Parameter (P_{K}(x)) entlang der Schweißbahn (3) eine Warnung ausgegeben und bzw. oder eine Mitteilung gespeichert wird.

11. Schweißvorrichtung (1) zur Durchführung eines Schweißprozesses an einem Werkstück (4) mit festgelegten Schweißparametern (Pᵢ(x)), mit einem an einem Roboter (11) befestigten Schweißbrenner (2), der während des Schweißprozesses entlang einer vorgegebenen Schweißbahn (3) über das Werkstück (4) führbar ist, wobei der Schweißbrenner (2) mit einer Schweißstromquelle (12) verbunden ist, welche Schweißstromquelle (12) eine Steuereinrichtung (13) zur Steuerung des Schweißprozesses mit vorgegebenen Schweißparametern (Pᵢ(x)) in Abhängigkeit der Position (x) entlang der Schweißbahn (3) aufweist, **dadurch gekennzeichnet, dass** eine Aufnahmeeinrichtung (15) zur Aufnahme zumindest eines die Abkühlung repräsentierenden Parameters (P_{K}(x)) in Abhängigkeit der Position (x) entlang der Schweißbahn (3) vor Durchführung des Schweißprozesses vorgesehen ist, und dass die Steuereinrichtung (13) mit der Aufnahmeeinrichtung (15) verbunden und zur Steuerung des Schweißprozesses mit optimierten Schweißparametern (P_{i,opt}(x)) in Abhängigkeit der Position (x) entlang der Schweißbahn (3) unter Berücksichtigung des zumindest einen die Abkühlung repräsentierenden Parameters (P_{K}(x)) entlang der Schweißbahn (3) ausgebildet ist.

12. Schweißvorrichtung (1) nach Anspruch 11, **dadurch gekennzeichnet, dass** die Aufnahmeeinrichtung (15) zur Aufzeichnung des zumindest einen die Abkühlung repräsentierenden Parameters (P_{K}(x)) entlang der Schweißbahn (3) eine Wärmequelle (5) zur Aufwärmung des Werkstücks (4) entlang der Schweißbahn (3) und zumindest eine Detektionseinrichtung (6) zur Aufnahme des zumindest einen die Abkühlung repräsentierenden Parameters (P_{K}(x)) entlang der Schweißbahn (3) beinhaltet.

13. Schweißvorrichtung (1) nach Anspruch 12, **dadurch gekennzeichnet, dass** die Wärmequelle (5) zur Aufwärmung des Werkstücks (4) entlang der Schweißbahn (3) durch eine Lichtquelle (7), insbesondere eine Laserstrahlquelle (8), gebildet ist.

14. Schweißvorrichtung (1) nach einem der Ansprüche 12 oder 13, **dadurch gekennzeichnet, dass** zumindest eine Detektionseinrichtung (6) durch eine Wärmebildkamera (9), insbesondere eine Infrarotkamera, und bzw. oder durch zumindest einen Temperatursensor (10) zur Messung der Temperatur der Oberfläche des Werkstücks (4) entlang der Schweißbahn (3) gebildet ist.

15. Schweißvorrichtung (1) nach Anspruch 11, **dadurch gekennzeichnet, dass** die Aufnahmeeinrichtung (15) zur Aufzeichnung des zumindest einen die Abkühlung repräsentierenden Parameters (P_{K}(x')) entlang der Schweißbahn (3) eine virtuelle Wärmequelle (5') zur Aufwärmung einer virtuellen Nachbildung (4') des Werkstücks (4) entlang einer der Schweißbahn (3) entsprechenden virtuellen Schweißbahn (3') und zumindest eine virtuelle Detektionseinrichtung (6') zur Aufnahme des zumindest einen die Abkühlung repräsentierenden Parameters (P_{K}(x')) entlang der virtuellen Schweißbahn (3') beinhaltet.

## Claims

1. Method for defining welding parameters (Pᵢ(x)) for a welding process on a workpiece (4), in which a welding torch (2) fastened to a robot (11) is guided over the workpiece (4) along a predetermined welding path (3) and predetermined welding parameters (Pᵢ(x)) for processing the workpiece (4) are set as a function of the position (x) along the welding path (3), **characterised in that** before the welding process is carried out, at least one parameter (P_{K}(x)) representing the cooling is recorded as a function of the position (x) along the welding path (3), and the at least one parameter (P_{K}(x)) representing the cooling along the welding path (3) is taken into account when defining optimised welding parameters (P_{i,opt}(x)) as a function of the position (x) along the welding path (3) for the welding process.

2. Method according to claim 1, **characterised in that** before the welding process is carried out, the workpiece (4) is heated along the welding path (3) by a heat source (5), and the at least one parameter (P_{K}(x)) representing the cooling is recorded along the welding path (3) by means of at least one detection device (6).

3. Method according to claim 2, **characterised in that** the workpiece (4) is heated in a pulsed manner along the welding path (3), preferably to a temperature below the melting temperature (Tₛ) of the workpiece (4).

4. Method according to either claim 2 or claim 3, **characterised in that** in addition to, in particular during, the recording of the at least one parameter (P_{K}(x)) representing the cooling along the welding path (3), the workpiece base temperature (Tu) is recorded.

5. Method according to any of claims 2 to 4, **characterised in that** the at least one parameter (P_{K}(x)) representing the cooling is recorded along the welding path (3) during a cleaning process carried out before the welding process, in particular a surface plasma processing operation.

6. Method according to claim 1, **characterised in that,** before the welding process is carried out, a virtual replication (4') of the workpiece (4) is heated along a virtual welding path (3') corresponding to the welding path (3) by a virtual heat source (5'), and the at least one parameter (P_{K}(x')) representing the cooling is recorded along the virtual welding path (3') by means of at least one virtual detection device (6').

7. Method according to claim 1, **characterised in that** before the welding process is carried out, the at least one parameter (P_{K}(x')) representing the cooling along a virtual welding path (3') corresponding to the welding path (3) is determined from a virtual replication (4') of the workpiece (4) with predetermined environmental situations, for example clamping devices (17), from stored properties of the virtual replication (4') of the workpiece (4) on the basis of the material and the geometric conditions.

8. Method according to any of claims 1 to 7, **characterised in that** the process of recording the at least one parameter (P_{K}(x)) representing the cooling along the welding path (3) is carried out at a speed (V_{A}) which is higher than or equal to the welding speed (V_{S}) during the welding process.

9. Method according to any of claims 1 to 8, **characterised in that** the average cooling rate (ΔT/Δt) is recorded as a parameter (P_{K}(x)) representing the cooling.

10. Method according to any of claims 1 to 9, **characterised in that** when predetermined threshold values (P_{KG}(x)) for the parameter (P_{K}(x)) representing the cooling along the welding path (3) are exceeded and/or fallen below, a warning is issued and/or a notification is stored.

11. Welding device (1) for carrying out a welding process on a workpiece (4) with fixed welding parameters (Pᵢ(x)), comprising a welding torch (2) which is fastened to a robot (11) and is guidable over the workpiece (4) along a predetermined welding path (3) during the welding process, the welding torch (2) being connected to a welding current source (12), which welding current source (12) has a control device (13) for controlling the welding process with predetermined welding parameters (Pᵢ(x)) as a function of the position (x) along the welding path (3), **characterised in that** a recording device (15) is provided for recording at least one parameter (P_{K}(x)) representing the cooling as a function of the position (x) along the welding path (3) before the welding process is carried out, and **in that** the control device (13) is connected to the recording device (15) and configured to control the welding process with optimised welding parameters (P_{i,opt}(x)) as a function of the position (x) along the welding path (3), taking into account the at least one parameter (P_{K}(x)) representing the cooling along the welding path (3).

12. Welding device (1) according to claim 11, **characterised in that** the recording device (15) for recording the at least one parameter (P_{K}(x)) representing the cooling along the welding path (3) contains a heat source (5) for heating the workpiece (4) along the welding path (3) and at least one detection device (6) for recording the at least one parameter (P_{K}(x)) representing the cooling along the welding path (3).

13. Welding device (1) according to claim 12, **characterised in that** the heat source (5) for heating the workpiece (4) along the welding path (3) is formed by a light source (7), in particular a laser beam source (8).

14. Welding device (1) according to either claim 12 or claim 13, **characterised in that** at least one detection device (6) is formed by a thermal imaging camera (9), in particular an infrared camera, and/or by at least one temperature sensor (10) for measuring the temperature of the surface of the workpiece (4) along the welding path (3).

15. Welding device (1) according to claim 11, **characterised in that** the recording device (15) for recording the at least one parameter (P_{K}(x')) representing the cooling along the welding path (3) contains a virtual heat source (5') for heating a virtual replication (4') of the workpiece (4) along a virtual welding path (3') corresponding to the welding path (3), and at least one virtual detection device (6') for recording the at least one parameter (P_{K}(x')) representing the cooling along the virtual welding path (3').

## Revendications

1. Procédé d'établissement de paramètres de soudage (Pᵢ(x)) pour un processus de soudage au niveau d'une pièce à usiner (4), où une torche de soudage (2) fixée contre un robot (11) est guidée le long d'une bande de soudage (3) prédéfinie par-dessus la pièce à usiner (4) et des paramètres de soudage (Pᵢ(x)) prédéfinis en fonction de la position (x) le long de la bande de soudage (3) sont réglés pour le traitement de la pièce à usiner (4), **caractérisé en ce qu'**avant l'exécution du processus de soudage au moins un paramètre représentant le refroidissement (P_{K}(x)) est enregistré en fonction de la position (x) le long de la bande de soudage (3), et le au moins un paramètre représentant le refroidissement (P_{K}(x)) le long de la bande de soudage (3) est pris en compte pour le processus de soudage lors de l'établissement de paramètres de soudage optimisés (P_{i, opt}(x)) en fonction de la position (x) le long de la bande de soudage (3).

2. Procédé selon la revendication 1, **caractérisé en ce qu'**avant l'exécution du processus de soudage la pièce à usiner (4) est réchauffée avec une source de chaleur (5) le long de la bande de soudage (3) et le au moins un paramètre représentant le refroidissement (P_{K}(x)) le long de la bande de soudage (3) est enregistré à l'aide d'au moins un équipement de détection (6).

3. Procédé selon la revendication 2, **caractérisé en ce que** la pièce à usiner (4) est réchauffée sous forme d'impulsions le long de la bande de soudage (3), de préférence à une température en-dessous de la température de fusion (Tₛ) de la pièce à usiner (4).

4. Procédé selon la revendication 2 ou 3, **caractérisé en ce qu'**en complément de, en particulier pendant, l'enregistrement du au moins un paramètre représentant le refroidissement (P_{K}(x)) le long de la bande de soudage (3) est enregistrée la température de base de la pièce à usiner (Tᵤ).

5. Procédé selon l'une des revendications 2 à 4, **caractérisé en ce que** le au moins un paramètre représentant le refroidissement (P_{K}(x)) le long de la bande de soudage (3) est enregistré pendant un processus de nettoyage exécuté avant le processus de soudage, en particulier un processus de traitement par plasma de surface.

6. Procédé selon la revendication 1, **caractérisé en ce qu'**avant l'exécution du processus de soudage une réplique virtuelle (4') de la pièce à usiner (4) le long d'une bande de soudage virtuelle (3') correspondant à la bande de soudage (3) est réchauffée avec une source de chaleur virtuelle (5') et le au moins un paramètre représentant le refroidissement (P_{K}(x')) le long de la bande de soudage virtuelle (3') est enregistré à l'aide d'au moins un équipement de détection virtuel (6').

7. Procédé selon la revendication 1, **caractérisé en ce qu'**avant l'exécution du processus de soudage à partir d'une réplique virtuelle (4') de la pièce à usiner (4) avec des situations environnantes prédéfinies, par exemple des dispositifs de serrage (17), le au moins un paramètre représentant le refroidissement (P_{K}(x')) le long d'une bande de soudage virtuelle (3') correspondant à la bande de soudage (3) est déterminé à partir de propriétés mémorisées de la réplique virtuelle (4') de la pièce à usiner (4) en fonction du matériau et des conditions géométriques.

8. Procédé selon l'une des revendications 1 à 7, **caractérisé en ce que** la procédure de l'enregistrement du au moins un paramètre représentant le refroidissement (P_{K}(x)) le long de la bande de soudage (3) est exécuté à une vitesse (v_{A}), laquelle est égale ou supérieure à la vitesse de soudage (vₛ) pendant le processus de soudage.

9. Procédé selon l'une des revendications 1 à 8, **caractérisé en ce que** le taux de refroidissement moyen (ΔT/Δt) est enregistré en tant que paramètre représentant le refroidissement (P_{K}(x)).

10. Procédé selon l'une des revendications 1 à 9, **caractérisé en ce qu'**un avertissement est émis et/ou une notification est mémorisée lors d'un dépassement par le haut et/ou par le bas de valeurs limites (P_{KG}(x)) prédéfinies pour le paramètre représentant le refroidissement (P_{K}(x)) le long de la bande de soudage (3).

11. Dispositif de soudage (1) pour l'exécution d'un processus de soudage au niveau d'une pièce à usiner (4), avec des paramètres de soudage (Pᵢ(x)) préétablis, avec une torche de soudage (2) fixée contre un robot (11) qui peut être guidée pendant le processus de soudage le long d'une bande de soudage (3) prédéfinie par-dessus la pièce à usiner (4), dans lequel la torche de soudage (2) est reliée à une source de courant de soudage (12), laquelle source de courant de soudage (12) présente un équipement de commande (13) pour la commande du processus de soudage avec des paramètres de soudage (Pᵢ(x)) prédéfinis en fonction de la position (x) le long de la bande de soudage (3), **caractérisé en ce qu'**un équipement d'enregistrement (15) est prévu pour l'enregistrement d'au moins un paramètre représentant le refroidissement (P_{K}(x)) en fonction de la position (x) le long de la bande de soudage (3) avant l'exécution du processus de soudage, et **en ce que** l'équipement de commande (13) est relié à l'équipement d'enregistrement (15) et conçu pour la commande du processus de soudage avec des paramètres de soudage optimisés (P_{i,opt}(x)) en fonction de la position (x) le long de la bande de soudage (3) en tenant compte du au moins un paramètre représentant le refroidissement (P_{K}(x)) le long de la bande de soudage (3).

12. Dispositif de soudage (1) selon la revendication 11, **caractérisé en ce que** pour l'enregistrement du au moins un paramètre représentant le refroidissement (P_{K}(x)) le long de la bande de soudage (3) l'équipement d'enregistrement (15) contient une source de chaleur (5) pour le réchauffement de la pièce à usiner (4) le long de la bande de soudage (3) et au moins un équipement de détection (6) pour l'enregistrement du au moins un paramètre représentant le refroidissement (P_{K}(x)) le long de la bande de soudage (3).

13. Dispositif de soudage (1) selon la revendication 12, **caractérisé en ce que** la source de chaleur (5) est formée pour le réchauffement de la pièce à usiner (4) le long de la bande de soudage (3) par une source lumineuse (7), en particulier une source de faisceau laser (8).

14. Dispositif de soudage (1) selon l'une des revendications 12 ou 13, **caractérisé en ce qu'**au moins un équipement de détection (6) est formé par une caméra thermique (9), en particulier une caméra infrarouge, et/ou par au moins un capteur de température (10) pour la mesure de la température de la surface de la pièce à usiner (4) le long de la bande de soudage (3).

15. Dispositif de soudage (1) selon la revendication 11, **caractérisé en ce que** pour l'enregistrement du au moins un paramètre représentant le refroidissement (P_{K}(x')) le long de la bande de soudage (3) l'équipement d'enregistrement (15) contient une source de chaleur virtuelle (5') pour le réchauffement d'une réplique virtuelle (4') de la pièce à usiner (4) le long d'une bande de soudage virtuelle (3') correspondant à la bande de soudage (3) et au moins un équipement de détection virtuel (6') pour l'enregistrement du au moins un paramètre représentant le refroidissement (P_{K}(x')) le long de la bande de soudage virtuelle (3').
